# EUROPÄISCHE PATENTSCHRIFT

(11) **EP 2 342 682 B1**
(45) Veröffentlichungstag und Bekanntmachung des Hinweises auf die Patenterteilung: **27.03.2013**
(21) Anmeldenummer: 09740279.6
(22) Anmeldetag: 23.10.2009
(51) Int. Cl.: G06K 19/077

(54) **VERFAHREN ZUR HERSTELLUNG VON DATENTRÄGERN UND DATENTRÄGERHALBZEUGEN, SOWIE DATENTRÄGER UND DATENTRÄGERHALBZEUG**
METHOD FOR PRODUCING DATA CARRIERS AND SEMI-FINISHED DATA CARRIERS, AND DATA CARRIER AND SEMI-FINISHED DATA CARRIER
PROCÉDÉ DE PRODUCTION DE SUPPORTS DE DONNÉES ET DE SUPPORTS DE DONNÉES SEMI-FINIS, AINSI QUE SUPPORTS DE DONNÉES ET SUPPORTS DE DONNÉES SEMI-FINIS

(30) Priorität: 24.10.2008 DE 102008053096
(43) Veröffentlichungstag der Anmeldung: 13.07.2011
(73) Patentinhaber: Giesecke & Devrient GmbH, 81677 München (DE)
(72) Erfinder: FINKENZELLER, Klaus, 85774 Unterföhring (DE); HOFER, Werner, 85604 Zorneding (DE)
(86) Internationale Anmeldenummer: PCT/EP2009/007612
(87) Internationale Veröffentlichungsnummer: WO 2010/046127

(56) Entgegenhaltungen:
- EP-A1- 1 739 598
- WO-A1-2004/012138
- DE-A1- 19 942 932

## Beschreibung

Die Erfindung betrifft ein Verfahren zur Herstellung von mehrschichtigen elektronischen Datenträgern mit mindestens einer Transponderspule für den kontaktlosen Daten- und/oder Energietransfer und zur Herstellung eines Halbzeugs für einen solchen Datenträger sowie einen auf diese Weise hergestellten Datenträger bzw. ein Datenträgerhalbzeug.

Mehrschichtige elektronische Datenträger mit Transponderspule zur kontaktlosen Datenübertragung dienen beispielsweise als Kreditkarte, Scheckkarte, Ausweiskarte aber auch als Fahrkarte, Eintrittskarte, Sicherheitsetikett, Sicherheitsanhänger und dergleichen. Eine oder mehrere innere Schichten eines solchen Datenträgers tragen elektronische Bauteile wie Chip, Transponderspule, etc. sowie diese Bauteile verbindende Leiterbahnen. Die elektronischen Bauteile der inneren Schichten werden durch äußere Deckschichten gegen Umwelteinflüsse geschützt. Die Deckschichten können z. B. bedruckt und/ oder eingefärbt sein und Aussparungen für den zusätzlichen kontaktbehafteten Datentransfer unmittelbar mit einem in dem Datenträger enthaltenen Chip aufweisen.

In diesem Zusammenhang ist es bekannt, die Transponderspule durch zwei auf derselben Oberfläche einer Trägerschicht angeordnete Spulenteile zu bilden, die durch Falten der Trägerschicht übereinander zu liegen kommen und durch den durch die Faltung gebildeten Zwischenraum hindurch miteinander kontaktiert werden. An denjenigen Stellen, an denen sich die übereinander liegenden Spulenteile kreuzen, wird zur Vermeidung von Kurzschlüssen eine Isolierschicht vorgesehen. Dabei kann es sich um eine isolierende Lackschicht (WO-A-00/13140, DE 100 00 090 A1), einen Distanzkern (DE 198 11 578 A1) oder durch einen zwischen die gefaltete Trägerschicht geklappten Teil der Trägerschicht selbst (WO-A-2004/012138) handeln. Eine solche gefaltete Trägerschicht kann sowohl als Halbzeug, insbesondere als Inlett, für die Herstellung eines mehrschichtigen elektronischen Datenträgers dienen oder kann bereits selbst den mehrschichtigen elektronischen Datenträger bilden.

Ein gattungsgemäßer Datenträger ist aus der DE 199 42 932 A1 bekannt. Das Dokument beschreibt ein Verfahren zur Herstellung von Chipkarten, welche durch Faltung eines ausgestanzten Bogens gebildet werden. Anschließend wird der gefaltete Bogen verpreßt und der zuvor aufgebrachte Kleber aktiviert. In einem letzten Verfahrensschritt wird die Chipkarte aus dem Bogen ausgestanzt oder ausgeschnitten. Die unabhängig Ausprüche 7 un 8 sind durch deises Dokument abgegenzt.

Aufgabe der vorliegenden Erfindung ist es insbesondere, ein einfaches Verfahren zur Herstellung solcher gefalteter Datenträger und Datenträgerhalbzeuge anzugeben.

Diese Aufgabe wird mit den Merkmalen der unabhängigen Ansprüche gelöst. In davon abhängigen Ansprüchen sind vorteilhafte Ausgestaltungen und Weiterbildungen sowie mit dem Verfahren herstellbare Datenträger und Datenträgerhalbzeuge angegeben.

Die Erfindung geht von einem sogenannten Endlosverfahren aus, bei dem die Trägerschicht, aus der der Datenträger oder das Datenträgerhalbzeug gefaltet werden soll, von einer Rolle abgezogen wird. Ein solches kontinuierliches Verfahren ist in aller Regel wirtschaftlicher als eine Einzelkartenherstellung. Auf der Trägerschicht können die Spulenteile, welche erst durch die Trägerschichtfaltung zu einer funktionsfähigen Spule verbunden werden, bereits aufgebracht sein oder sie können in einem speziellen Verfahrensschritt auf eine Oberfläche der Trägerschicht aufgebracht werden. Anschließend wird die Trägerschicht entlang einer Faltlinie, die zwischen den zwei Spulenteilen verläuft, so gefaltet, dass die zwei Spulenteile auf einander gegenüberliegenden Innenseiten der gefalteten Trägerschicht liegen. Die derart gefaltete Trägerschicht wird dann zu einem Schichtverbund miteinander verbunden, vorzugsweise in einer in die Gesamtvorrichtung integrierten Laminierstation, wobei die beiden Spulenteile durch den durch die Faltung erzeugten Zwischenraum hindurch miteinander kontaktiert werden. In einem separaten Schritt werden dann die Datenträger oder Datenträgerhalbzeuge aus der gefalteten Trägerschicht herausgetrennt. Im Idealfall sind die Abmessungen von vornherein so gewählt, dass die gefaltete Trägerbahn lediglich in konstanten Abschnitten durchtrennt werden muss. Während die Faltlinie gemäß einer Ausführung quer zur Abwickelrichtung verlaufen kann, verläuft die Faltlinie gemäß einer bevorzugten Ausführung parallel zur Abwickelrichtung. Es entsteht dann eine gefaltete Trägerschichtbahn mit einer großen Anzahl hintereinander angeordneter Spulen.

Ein besonderer Vorteil dieser Endlosfertigung liegt darin, dass die einzelnen Schichten nicht von unterschiedlichen Rollen zusammengeführt werden müssen, sondern aufgrund des Faltens der Trägerschicht aus einer einzigen Schicht gebildet werden können. Aufwendige Steuerungen zur Vermeidung eines Versatzes zwischen von unterschiedlichen Rollen eingespeisten Trägermaterialien können somit weitgehend entfallen. Vielmehr wird eine exakte Ausrichtung der Elemente zueinander bereits dadurch erreicht, dass sie auf derselben Oberfläche der Trägerschicht registergenau zueinander aufgebracht werden können. Es muss lediglich sichergestellt werden, dass die Faltung der Trägerschicht möglichst exakt an den dazu vorgesehenen Faltlinien erfolgt.

Statt nur einer einzelnen Faltlinie können auch eine oder mehrere weitere Faltlinien vorgesehen sein, die sich seitlich neben den zwei Spulenteilen parallel zur ersten Faltlinie erstrecken und die vorzugsweise so gefaltet werden, dass die Trägerschicht beim Faltvorgang in einfacher Weise insgesamt zickzackartig gefaltet werden kann. Im Fall von zwei solchen weiteren Faltlinien liegen diese vorzugsweise auf einander gegenüberliegenden Seiten relativ zu den beiden Spulenteilen.

Während die Faltung der Trägerschicht entlang der (ersten) Faltlinie zwischen den beiden Spulenteilen dazu führt, dass die beiden Spulenteile nach innen gefaltet werden und auf einander gegenüberliegenden Innenseiten der gefalteten Trägerschicht übereinander zu liegen kommen, führt die zickzackartige Faltung dazu, dass die Trägerschicht entlang der oder den weiteren Faltlinien nach außen gefaltet wird. Die selbe Oberfläche der Trägerschicht, welche die beiden nach innen gefalteten Spulenteile trägt, bildet dann die äußere Oberfläche des Datenträgers oder Datenträgerhalbzeugs für den entlang der. weiteren Faltlinie nach außen gefalteten Teil der Trägerschicht.

Wenn man nun gemäß einer bevorzugten Ausführungsform der Erfindung auf dieser nach außen weisenden Oberfläche (oder im Falle zweier weiterer Faltlinien auf beiden nach außen weisenden Oberflächen) der Trägerschicht ein Datenträgerlayout aufbringt, beispielsweise aufdruckt, so befindet sich dieses Layout vor dem Faltprozess mit den beiden Spulenteilen auf einer gemeinsamen Oberfläche der Trägerschicht.

Der mit dieser Gestaltung erzielte Vorteil liegt darin, dass alle Elemente des späteren Datenträgers auf derselben Oberfläche der Trägerschicht aufgebracht werden können, insbesondere also die elektronischen Bauelemente einschließlich der zwei Spulenteile, ein Mikrochip, eine etwaige Isolierschicht zur Verhinderung eines Kurzschlusses zwischen den beiden Spulenteilen und das Layout. Soweit es technisch möglich ist, können die einzelnen Elemente gemeinsam in demselben Verfahren aufgebracht werden. So lassen sich beispielsweise die Spulenteile der Transponderspule und das Layout beide im Offsetverfahren aufbringen.

Ein Kurzschluss zwischen den beiden aufeinandergefalteten Spulenteilen in dem Bereich, in dem die übereinanderliegenden Spulenteile einander kreuzen, kann durch Aufbringen von Isoliermaterial in den gefährdeten Bereichen verhindert werden, beispielsweise als vollflächige oder teilflächige Lackschicht. Alternativ kann eine von der Trägerschicht verschiedene isolierende Zwischenschicht im Zwischenraum zwischen den zwei Spulenteilen angeordnet werden, die als separate Folien- oder Papierschicht von einer zweiten Rolle abgewickelt wird.

Die Faltung zur Erzielung eines mehrschichtigen flachstückartigen Substrats lässt sich bei dem bevorzugten Ausführungsbeispiel (Faltlinien verlaufen in Abwickelrichtung) technisch elegant umsetzen, wenn in den Faltlinienbereichen senkrechte Kräfte auf die Trägerschichtoberfläche aufgebracht werden, während gleichzeitig auf die beiden Trägerschichtlängsseiten Querkräfte wirken, die die Trägerschicht zusammendrücken. Aufgrund der senkrecht wirkenden Kräfte schiebt sich das Trägerschichtmaterial dabei zusammen. Dies setzt im Falle mehrerer Faltlinien natürlich voraus, dass in unmittelbar zueinander benachbarten Faltlinienbereichen jeweils entgegengesetzte senkrechte Kräfte wirken. Das Ergebnis ist dann eine ziehharmonikaartige Faltung. Die Anzahl der Faltlinien ist bei dieser ziehharmonikaartigen Faltung nicht begrenzt. Jede weitere Faltlinie bedeutet eine zusätzliche Schicht des herzustellenden mehrschichtigen Substrats. So können beispielsweise die beiden äußeren Enden der ziehharmonikaartig gefalteten Trägerschicht transluzent sein und über die nach außen weisenden Layouts so gefaltet werden, dass die Layouts durch die gefaltete transluzente Trägerschicht hindurch visuell erkennbar bleiben. Auf diese Weise lässt sich das Layout vor Umwelteinflüssen schützen. Dadurch ist man in der Wahl der Mittel zur Aufbringung des Layouts freier.

Es ist allerdings nicht zwingend, dass die gesamte Trägerschicht ziehharmonikaartig gefaltet wird. Eine andere Art der Faltung im Endlosprozess ist ebenfalls möglich, wenn auch technisch aufwendiger. So kann beispielsweise vorgesehen sein, die Trägerschicht im wesentlichen ziehharmonikaartig zu falten, jedoch eine der beiden Außenseiten der Trägerschicht nicht nach außen sondern nach innen zu falten, so dass sie eine isolierende Zwischenschicht zwischen den beiden aufeinandergefalteten Spulenteilen bildet, um so einen Kurzschluss zu vermeiden.

Nachfolgend wird die Erfindung beispielhaft anhand der begleitenden Zeichnungen beschrieben. Darin zeigen:
- Fig.: 1 eine Trägerschicht mit Transponderspule und vorderseitigem sowie rückseitigem Layout gemäß einer ersten Ausführungsform,
- Fig. 2: die Faltweise der Trägerschicht aus Figur 1 mit eingelegter Isolierschicht,
- Fig. 3: die auf sich selber gefaltete Trägerschicht mit Isolierschicht aus Figur 1,
- Fig. 4: einen Ausschnitt aus einer Rollenware gemäß einem ersten Ausführungsbeispiel,
- Fig. 5a bis 5c: Kraftaufbringungsrichtungen beim automatischen Falten,
- Fig. 6: eine Gesamtvorrichtung zur Herstellung von Datenträgern und Datenträgerhalbzeugen,
- Fig. 7: eine Weiterbildung der Trägerschicht gemäß Figur 1,
- Fig. 8: eine Trägerschicht mit Transponderspule und vorderseitigem Layout gemäß einer zweiten Ausführungsform,
- Fig. 9: die Faltweise der Trägerschicht aus Figur 8,
- Fig. 10: die auf sich selber gefaltete Trägerschicht aus Figur 8, und
- Fig. 11: einen Ausschnitt aus einer Rollenware gemäß einem zweiten Ausführungsbeispiel.

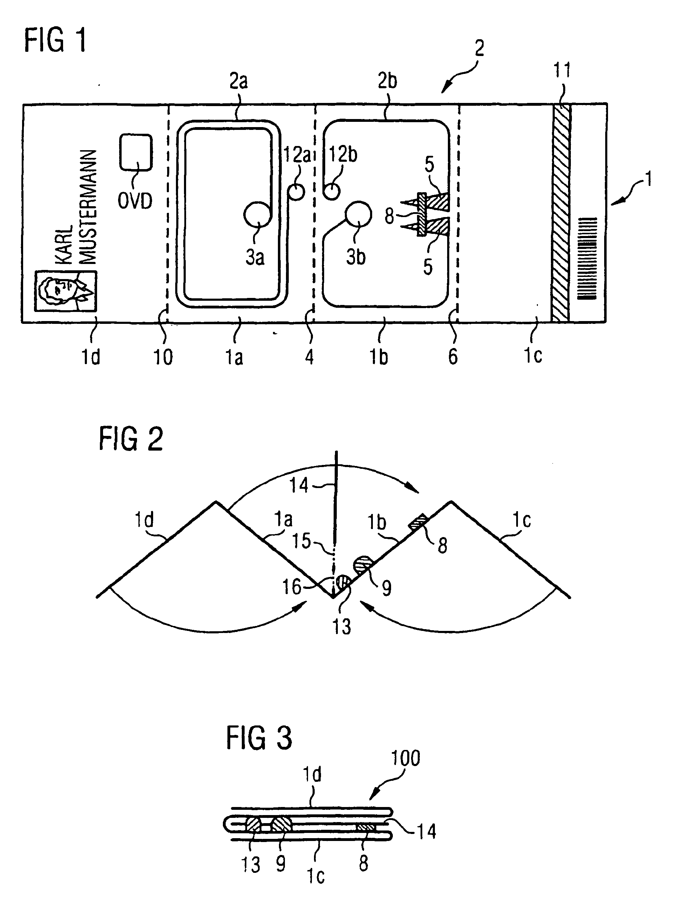

Figur 1 zeigt als eine erste Ausführungsform in Draufsicht eine Trägerschicht 1 mit einer Transponderspule 2, die in bekannter Weise auf die Trägerschicht 1 in einem Druckverfahren oder in einem Ätzverfahren aufgebracht ist. Die Figuren 2 und 3 zeigen einerseits die Faltweise der Trägerschicht 1 und andererseits den aus der Trägerschicht 1 gefalteten Datenträger 100 bzw. ein Datenträgerhalbzeug.

Die Transponderspule 2 besteht aus einem ersten Spulenteil 2a und einem zweiten Spulenteil 2b mit jeweils einer Kontaktzone 3a bzw. 3b. Die beiden Kontaktzonen 3a, 3b kommen beim Falten (Figur 2) übereinander zu liegen, wenn die Trägerschicht 1 an der gedachten, punktiert dargestellten Faltlinie 4 auf sich selbst gefaltet wird. Eine der beiden Spulenteile 2a, 2b, im dargestellten Fall der zweite Spulenteil 2b, weist darüber hinaus Kontaktanschlüsse 5 zum Anschließen eines elektronischen Bauteils 8, insbesondere eines Chips, an die Transponderspule 2 auf. Anstatt den Chip 8 separat herzusteilen und aufzubringen, können dessen elektronische Komponenten auch in einem oder mehreren Druckprozessen unter Verwendung von halbleitenden Polymeren hergestellt werden. Durch das anschließende Falten des Trägermaterials ergibt sich für die halbleitenden Polymere ein zusätzlicher Schutz gegen das Eindringen von Sauerstoff, wodurch Degradationseffekte vermindert werden.

Die Trägerschicht 1 selbst besteht aus einem isolierenden Material, vorzugsweise aus einer faltbaren Kunststofffolie oder einer Papier- oder Papplage. Das Trägermaterial kann auch aus Kombinationen aus diesen Materialien bestehen, insbesondere z.B. aus einer coextrudierten Kunststofffolie. Die Faltlinien können gelocht oder dünner ausgebildet sein, um den Faltvorgang zu erleichtern.

Die Trägerschicht 1 gliedert sich somit in eine erste Zone 1a mit dem ersten Spulenteil 2a und eine zweite Zone 1b mit dem zweiten Spulenteil 2b sowie darüber hinaus in eine dritte Zone 1c und eine vierte Zone 1d. Die die Zonen 1a bis 1d trennenden Faltlinien 4, 6 und 10 verlaufen parallel zueinander, wobei die erste Faltlinie 4, wie beschrieben, zwischen den beiden Spulenteilen 2a, 2b verläuft und die zweiten und dritten Faltlinien 10 bzw. 6 so angeordnet sind, dass einerseits die beiden Spulenteile 2a, 2b zu einer Seite und ein erstes Layout in der Zone 1d zur entsprechenden anderen Seite der zweiten Faltlinie 10 auf derselben Oberfläche aufgebracht sind und andererseits die beiden Spulenteile 2a, 2b zu einer Seite und die Zone 1c mit einem zweiten Layout zur entsprechend anderen Seite der dritten Faltlinie 6 angeordnet sind.

Das erste Layout auf der vierten Trägerschichtzone 1d umfasst in dem dargestellten Ausführungsbeispiel ein Portrait des Kartennutzers, insbesondere ein gedrucktes Foto, individuelle Nutzerdaten wie zum Beispiel den Nutzernamen, optisch variable Sicherheitselemente, wie hier zum Beispiel ein optisch variables Element OVD, und dergleichen. Dieses Layout weist aufgrund des nachfolgend beschriebenen Faltvorgangs am endgültigen Datenträger 100 bzw. am Datenträgerhalbzeug nach außen. Entsprechendes gilt auch für das zweite Layout auf der dritten Trägerschichtzone 1c, welches ebenfalls auf derselben Oberfläche der Trägerschicht 1 aufgebracht ist, auf der auch die beiden Spulenteile 2a, 2b und das erste Layout der vierten Trägerschichtzone 1d aufgebracht sind. Das zweite Layout auf der Trägerschichtzone 1c umfasst im dargestellten Ausführungsbeispiel einen Magnetstreifen 11 und einen Barcode. Weitere Sicherheitselemente, gedruckte Informationen und dergleichen können ebenfalls vorgesehen sein.

Figur 2 zeigt zu der in Figur 1 dargestellten Trägerschicht 1 den zugehörigen Faltprozess. Demnach werden die vier Trägerschichtzonen 1a, 1b, 1c, 1d ziehharmonikaartig aufeinandergefaltet, so dass die beiden Layouts auf den beiden Trägerschichtzonen 1c und 1d in Bezug auf die zwei miteinander kontaktierten Spulenteile 2a, 2b nach außen weisen. Dabei wird eine isolierende Zwischenschicht 14 in den Zwischenraum zwischen den beiden Spulenteilen 2a, 2b eingebracht, um einen Kurzschluss der beiden Spulenteile 2a, 2b zu verhindern. Die isolierende Zwischenschicht 14 besitzt eine Aussparung 15, um die beiden Kontaktzonen 3a, 3b dadurch hindurch unter Verwendung einer Kontaktpille bzw. eines Kontaktklebers 9 elektrisch leitend miteinander zu verbinden (Figur 3). Da die beiden Spulenteile 2a, 2b nicht über die erste Faltlinie 4 leitend miteinander verbunden sondern vielmehr an dieser Stelle unterbrochen sind, weist die isolierende Schicht eine zweite Aussparung 16 auf, um die zugehörigen Kontaktzonen 12a, 12b an den beiden Unterbrechungsenden der beiden Spulenteile 2a, 2b dadurch hindurch unter Verwendung einer Kontaktpille bzw. eines Kontaktklebers 13 (Figur 3) elektrisch leitend miteinander zu verbinden. Wenn man dagegen die beiden Spulenteile 2a, 2b über die erste Faltlinie 4 leitend miteinander verbindet, kann man auf die Kontaktzonen 12a, 12b und die Kontaktpille 13 verzichten. Anstelle einer Folie oder Papierlage kann die Zwischenschicht 14 auch durch einen Lack gebildet sein, der gegebenenfalls auch nur auf die kurzschlusskritischen Bereiche begrenzt ist.

Die auf sich selbst gefaltete Trägerschicht 1, wie in Figur 3 gezeigt, kann durch Laminieren unter Anwendung von Druck und gegebenenfalls Temperatur mit oder ohne Verwendung eines Klebers zu einem flachstückartigen Datenträger oder Datenträgerhalbzeug verarbeitet werden. Alternativ oder zusätzlich kann die Trägerschicht 1 entlang ihrer Außenkante mit einem Kleber versehen werden, bevor die Trägerschichtzonen aufeinander gefaltet werden, um einen festen Verbund der aufeinander gefalteten Trägerschichtzonen 1a bis 1d zu erhalten.

Die in Figur 3 gezeigte, auf sich selbst gefaltete Trägerschicht 1 kann als fertiger Datenträger verwendet werden, kann aber auch als Datenträgerhalbzeug dienen, beispielsweise als Inlett zur Weiterverarbeitung zu einem fertigen Datenträger. In jedem Falle ist es möglich, die Trägerschicht 1 zu bedrucken, zu beschichten oder in anderer Weise zu gestalten, so dass sie im zusammengefalteten Zustand von beiden Seiten ein individuelles, dem gewünschten Verwendungszweck entsprechendes Erscheinungsbild besitzt. Bevorzugt ist es dabei, lediglich die Oberfläche der Trägerschicht 1 mit einem Layout zu versehen, auf der auch die beiden Spulenteile 2a, 2b und die weiteren elektronischen Bauteile, wie etwa der Chip 8, angeordnet sind.

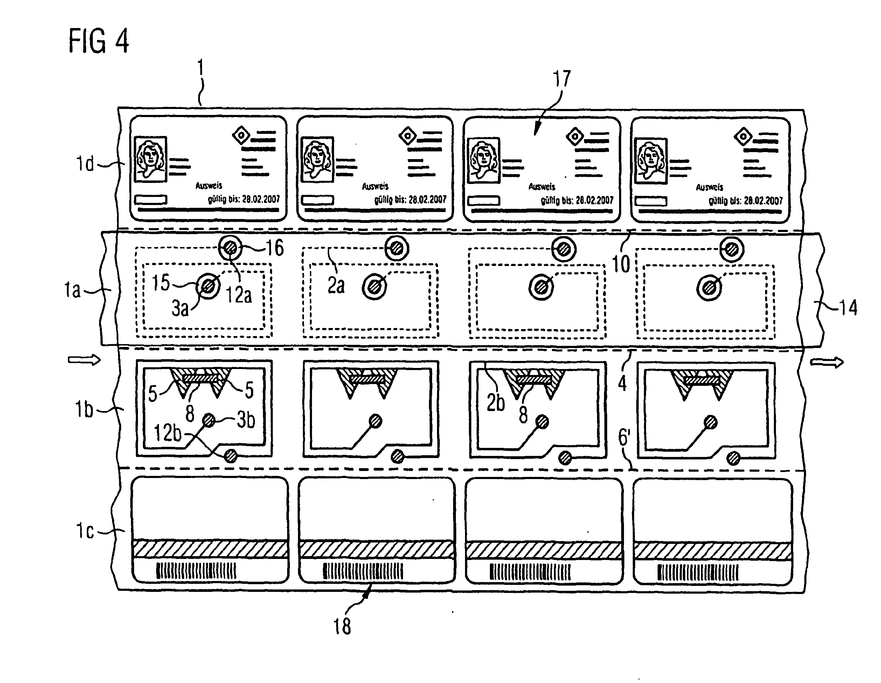

Figur 4 zeigt einen Ausschnitt aus einer Rollenware, bei der die Trägerschicht 1 eine beliebige Anzahl aufeinander folgender Nutzen umfasst, von denen jeder Nutzen vier Trägerschichtzonen 1a bis 1d umfasst. Zu erkennen in Figur 4 sind die Faltlinien 4, 6 und 10. Eine isolierende Zwischenschicht 4 mit Aussparungen 15 und 16 für die Kontaktzonen 3a, 3b und 12a, 12b ist vorgesehen. Sie kann als Folien- oder Papierstreifen von einer separaten Rolle abgewickelt und über die Trägerschichtzonen 1a (alternativ über die Trägerschichtzonen 1b) aufgelegt werden. Anstatt des Folien- oder Papierstreifens kann die Zwischenschicht auch als isolierende Beschichtung, beispielsweise aus einem Lack, ausgebildet sein. Die Pfeile in Figur 4 deuten die Transportrichtung an, in der die dargestellte Rollenware in einer Maschine transportiert wird. Die Faltlinien 4, 6 und 10 verlaufen parallel dazu.

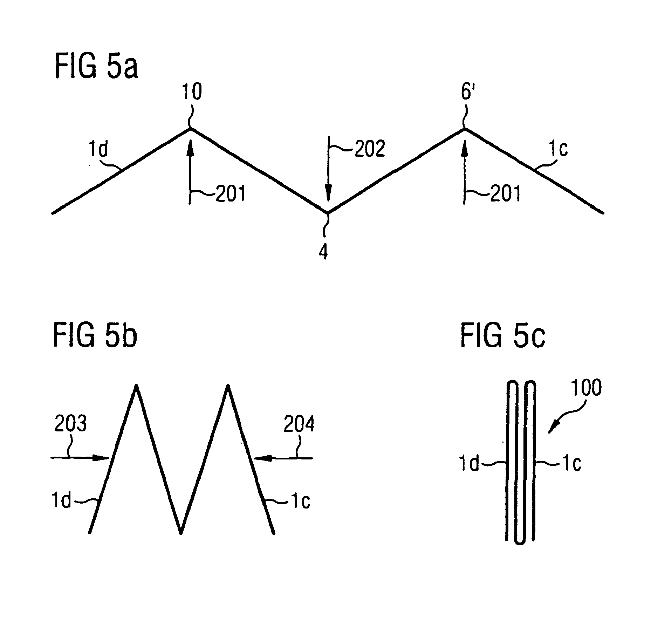

Die Figuren 5a bis 5c zeigen schematisch am Beispiel der in den Figuren 1 bis 4 dargestellten Trägerschicht 1 die Kraftaufbringungsrichtungen und die Kraftaufbringungsorte, um die Trägerschicht 1 ziehharmonikaartig zu falten. Dementsprechend werden zunächst einander entgegengesetzte Kräfte 201 und 202 an den Faltlinien 10 und 6 einerseits sowie an der Faltlinie 4 andererseits aufgebracht, so dass die Trägerschicht 1 eine Zick-Zack-Form annimmt (Figur 5a). Anschließend werden orthogonal dazu entgegengesetzte Kräfte 203 und 204 auf die dann außen liegenden Trägerschichtzonen 1d und 1c aufgebracht (Figur 5b), um die Trägerschicht 1 in den in Figur 5c dargestellten Zustand zu bringen. Diese Kräfte können auf die Trägerschicht 1 während ihres Transports aufgebracht werden, so dass in einfacher Weise eine gefaltete Trägerschichtbahn 1 entsteht.

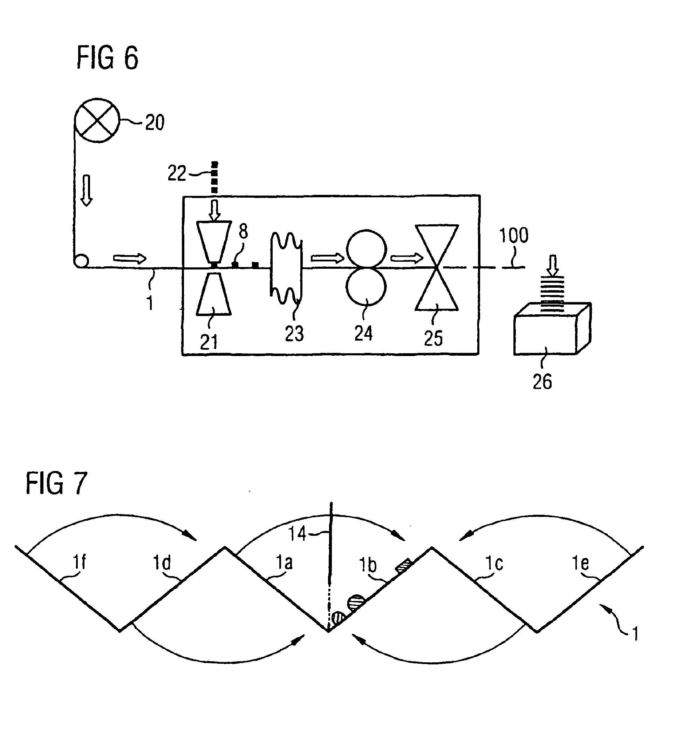

Figur 6 zeigt dazu eine Fertigungseinrichtung, welche wenigstens eine Abwickeleinrichtung 20 zum Abwickeln der Trägerschicht 1, eine Faltvorrichtung 23 zum Falten der Trägerschicht 1 sowie eine Vereinzelungseinrichtung 25 zum Heraustrennen der gefalteten Trägerschicht 1 als Datenträger 100 bzw. Datenträgerhalbzeug umfasst. Darüber hinaus können ein oder mehrere Montagestationen 21 zur Montage der elektronischen Komponenten, wie beispielsweise dem Chip 8, auf der Oberfläche der Trägerschicht 1 vorgesehen sein. Die elektronischen Komponenten werden über eine Zuführeinrichtung 22 der Montagestation 21 zugeführt. Optional ist desweiteren eine Laminierstation 24, mittels der die gefaltete Trägerschicht 1 unter Anwendung von Druck und/oder Temperatur stabilisiert wird.

Auf der Trägerschicht 1 in Figur 6 sind abgesehen von den noch aufzubringenden elektronischen Komponenten bereits alle weiteren Elemente, insbesondere die Layouts 17, 18, die Antennenstruktur 2, das optisch variable Element OVD und dergleichen bereits vorhanden und werden mit der Trägerschicht von der Rolle abgewickelt. Die Bearbeitungsvorrichtung gemäß Figur 6 kann aber auch um entsprechende Bearbeitungsmodule erweitert werden, insbesondere um Druckstationen und dergleichen.

Eine kombinierte Aufbringung der Antenne 2 und der Layouts 17, 18 kann im Offsetverfahren erfolgen. Dabei kann eine metallisierte Folie durch eine Kaltfolienapplikation aufgebracht und gleich im Anschluss das Layout gedruckt werden. Im Gegensatz zu herkömmlichen Effektfolienanwendungen, für die eine Hochdruckmaschine oder ein Flexowerk notwendig sind, wird die Kaltfolie über zwei konventionelle Offsetdruckwerke aufgetragen. Im ersten Druckwerk wird der Kleber über das Farbwerk und eine Offsetdruckplatte je nach Bedarf partiell oder über die gesamte Trägerschicht aufgebracht. Das zweite, eigentliche Kaltfolienwerk verfügt über Aufnahme- und Abrollwerke zum Auftrag der Folie. Sie wird gemeinsam mit der Trägerschicht in den Druckspalt zwischen Gummituch- und Druckzylinder geführt und durch Druck auf die mit Kleber beschichteten Partien des Bedruckstoffs übertragen. Nach Ablösen der Trägerfolie bleibt eine Metallschicht auf der Trägerschicht. Durch anschließendes Überdrucken der Folie lassen sich vielfältige Farbnuancen erreichen. Entsprechende Vorrichtungen gibt es von der Heidelberger Druckmaschinen AG. Die Isolierschicht kann in dem OffsetVerfahren in-line gleichzeitig miteingebracht werden.

Auch ein zweistufiger Prozess ist möglicht, bei dem im ersten Schritt die Antenne 2 auf die Trägerschicht 1 aufgebracht wird und im zweiten Schritt die Design-Bedruckung zur Erzeugung der Layouts 17, 18 erfolgt. Das Druckverfahren kann hier abhängig von den Anforderungen variieren. Für eine individuelle Designgestaltung bietet sich das Ink-Jet-Verfahren an.

Insbesondere bei Trägerbahnen aus Papier ist ein Haftvermittler zweckmäßig. Die Aufbringung einer Haftvermittlerschicht kann bereits im Vorfeld zum Beispiel in Form einer LDPE- oder HDPE-Beschichtung erfolgen. Der Haftvermittler kann auch mit anderen Verfahren, zum Beispiel im Siebdruck, vor dem Laminierprozess aufgebracht werden.

Wie bereits erwähnt, können auch die elektronischen Komponenten des Datenträgers in einem oder mehreren Druckprozessen auf der Oberfläche der Trägerschicht 1 unter Verwendung von halbleitenden Polymeren erzeugt werden, wie dies aus der Polymerelektronik grundsätzlich bekannt ist. Durch das anschließende Falten des Trägermaterials ergibt sich für die halbleitenden Polymere ein zusätzlicher Schutz gegen das Eindringen von Sauerstoff, wodurch Degradationseffekte vermindert werden.

Figur 7 zeigt eine Weiterbildung der Trägerschicht aus den Figuren 1 bis 3. Bei diesem Ausführungsbeispiel sind zwei weitere Trägerschichtzonen 1e und 1f vorhanden, welche zumindest teilweise aus einem transparenten Material bestehen. Wenn die Trägerschicht 1, wie in Figur 7 gezeigt, ziehharmonikaartig aufeinandergefaltet wird, kommen diese transluzenten Trägerschichtzonen 1e, 1f über den Layouts der Trägerschichtzonen 1c, 1d zu liegen, so dass die Layouts einerseits vor Umwelteinflüssen geschützt sind und andererseits durch die transluzenten Zonen 1e, 1f hindurch für einen Betrachter sichtbar bleiben.

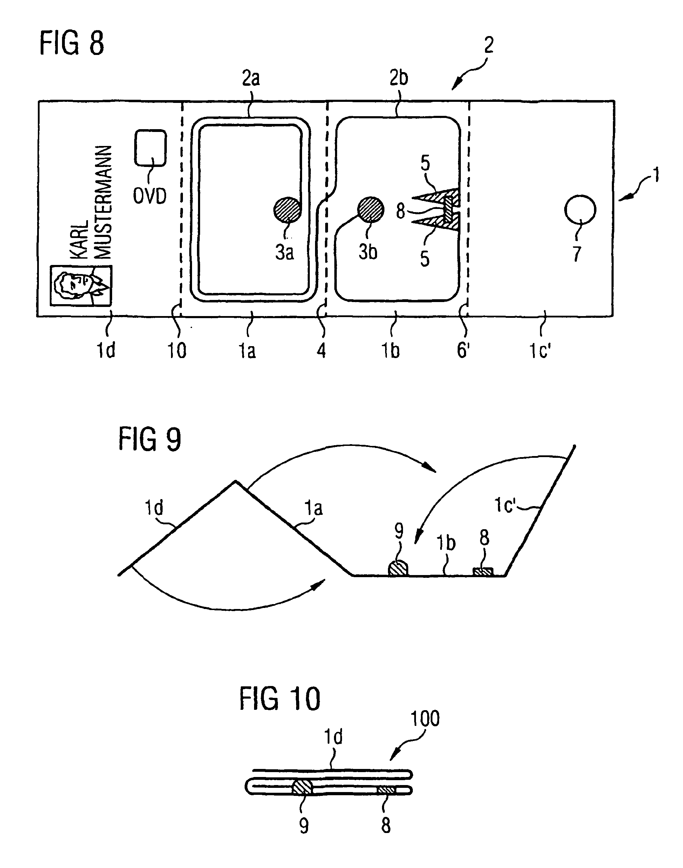

Figuren 8 bis 10 zeigen eine zweite Ausführungsform. Anders als bei der ersten Ausführungsform gemäß Figuren 1 bis 3 dient hier die dritte Trägerschichtzone 1c' nicht als nach außen weisende Deckschicht sondern als nach innen geklappte Isolierschicht. Die Trägerschichtzone 1c' wird entlang der dritten Faltlinie 6 auf das zweite Spulenteil 2b geklappt, bevor die erste Trägerschichtzone 1a mit dem ersten Spulenteil 2a entlang der ersten Faltlinie 4 darüber gefaltet wird, um so einen Kurzschluss zwischen sich kreuzenden Teilen der übereinandergefalteten Spulenteile 2a, 2b zu verhindern. Eine Aussparung 7 ist so in die dritte Trägerschichtzone 1c' gestanzt, dass sie in gefaltetem Zustand der Trägerschicht 1 genau zwischen den Kontaktzonen 3a, 3b der beiden Spulenteile 2a, 2b zu liegen kommt. Diese Technik ist aus der eingangs genannten WO 2004/012138 bekannt. Im Unterschied dazu weist die Trägerschicht 1 der dargestellten zweiten Ausführungsform jedoch zusätzlich zu den Zonen 1a, 1b und 1c' die weitere Zone 1d auf, auf deren Oberfläche das Layout aufgebracht ist, welches nach dem Faltvorgang letztendlich nach außen weist und für einen Betrachter sichtbar ist.

Figur 9 zeigt die zugehörige Faltsequenz der Trägerschichtzonen 1a bis 1d anhand von Pfeilen. Wie erwähnt, wird zunächst die als Isolierschicht fungierende dritte Trägerschichtzone 1c' auf die zweite Trägerschichtzone 1b geklappt und anschließend die erste Trägerschichtzone 1a auf die isolierende Trägerschichtzone 1c' gefaltet. Zuvor, währenddessen oder anschließend wird die Trägerschichtzone 1d entlang der zweiten Faltlinie 10 auf die Rückseite der ersten Trägerschichtzone 1a geklappt, so dass das Layout auf der vierten Trägerschichtzone 1d nach außen weist, wie in Figur 10 dargestellt.

Es ist am endgültigen Datenträger 100 bzw. Datenträgerhalbzeug somit für einen Betrachter sichtbar. Aus der in Figur 10 dargestellten Seitenansicht der auf sich selbst gefalteten Trägerschicht 1 mit dem darin eingeschlossenen Chip 8 wird desweiteren deutlich, wie die beiden Kontaktzonen 3a, 3b durch die Aussparung 7 der isolierenden dritten Trägerschichtzone 1c hindurch über eine Kontaktpille bzw. einen Kontaktkleber 9 elektrisch leitend miteinander verbunden sind.

Auch die Faltsequenz gemäß Figur 9 lässt sich automatisieren, indem entsprechende Kräfte während des Transports der Rollenware an geeigneten Stellen in geeigneter Richtung auf die Trägerschicht 1 einwirken. Aufgrund der unterschiedlichen Faltrichtungen ist dieser Faltprozess jedoch komplizierter zu automatisieren als die vorgeschriebene einfache Ziehharmonikafaltung. Anstatt die Datenträger 100 oder Datenträgerhalbzeuge bei *dieser* Ausführungsform aus dem Rollenmaterial nach dem Falten und gegebenenfalls Laminieren herauszutrennen, kann das Rollenmaterial auch vor dem Falten in Bögen getrennt werden und anschließend gefaltet und laminiert werden, bevor die Datenträger 100 bzw. Datenträgerhalbzeuge aus den gefalteten Bögen herausgetrennt werden. Insbesondere können in diesem Fall die Nutzenstreifen auf der Trägerschicht 1 auch orthogonal zu der in Figur 4 dargestellten Anordnung orientiert sein.

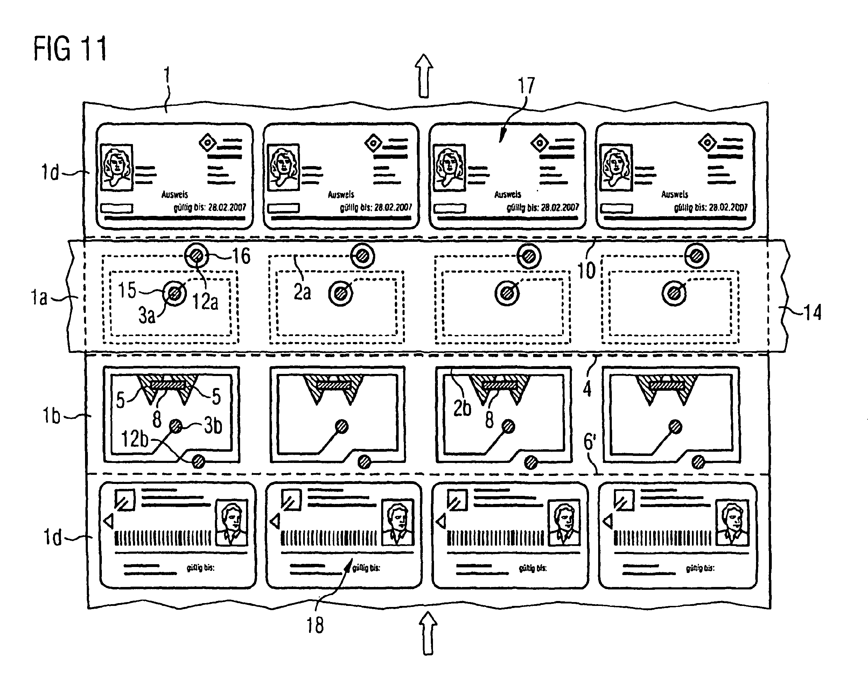

Diese Variante ist in Figur 11 dargestellt. Figur 11 zeigt einen Ausschnitt aus einer Rollenware, bei der die Trägerschicht 1 insgesamt vier parallel nebeneinander liegende Nutzenstreifen aufweist. Die Pfeile in Figur 11 deuten die Transportrichtung an, in der die dargestellte Rollenware in einer Maschine transportiert wird. Abweichend von den vorgenannten Ausführungsformen weist die Trägerschicht bei diesem Ausführungsbeispiel lediglich jeweils drei Trägerschichtzonen auf, nämlich die Zonen 1a, 1b mit Spulenteilen 2a, 2b sowie eine weitere Zone 1d mit einem Layout, das nach der Faltung der Trägerschicht außen liegt. Die Trägerschichtzone 1c mit einem zweiten Layout für die Rückseite bzw. die nach innen gefaltete Trägerschichtzone 1c' fehlen hier. Stattdessen schließt sich unmittelbar eine Trägerschichtzone 1d für die nächsten Datenträger bzw. Datenträgerhalbzeuge an, so dass die Faltlinie 6' bei diesem Ausführungsbeispiel letztlich eine Trennlinie markiert, an der die Trägerschicht 1 durchtrennt wird. Dementsprechend unterschiedlich sind die Layouts 17 und 18 der verschiedenen Trägerschichtzonen 1d. Bei diesem Ausführungsbeispiel kann die Trägerschicht 1 jeweils in Bögen unterteilt werden, die vier nebeneinanderliegende Trägerschichtzonen 1a, 1c', 1d umfassen, bevor diese Bögen dann in der vorbeschriebenen Weise gefaltet, laminiert und in einzelne Datenträger oder Datenträgerhalbzeuge geteilt werden.

## Patentansprüche

1. Verfahren zum Herstellen mehrschichtiger elektronischer Datenträger mit mindestens einer Transponderspule (2) für den kontaktlosen Daten- und/ oder Energietransfer im Endlosverfahren, umfassend die Schritte:
- Abwickeln einer bahnförmigen Trägerschicht (1) von einer Vorratsrolle (20),
- sofern nicht bereits vorhanden, Aufbringen von zwei Spulenteilen (2a, 2b) der Transponderspule (2) auf einer Oberfläche der Trägerschicht,
- Falten der Trägerschicht zumindest entlang einer ersten Faltlinie (4), die zwischen den zwei Spulenteilen (2a, 2b) verläuft, derart, dass die zwei Spulenteile (2a, 2b) auf einander gegenüberliegenden Innenseiten der gefalteten Trägerschicht (1) liegen,
- Verbinden der gefalteten Trägerschicht (1) zu einem Trägerschichtverbund, bei dem die zwei Spulenteile (2a, 2b) durch den durch die Faltung erzeugten Zwischenraum hindurch miteinander kontaktiert sind,
- Heraustrennen einzelner Datenträger aus dem Trägerschichtverbund, und
- Falten der Trägerschicht entlang mindestens einer weiteren Faltlinie (10), die seitlich neben den zwei Spulenteilen parallel zur ersten Faltlinie (4) verläuft, derart, dass die Trägerschicht insgesamt zick-zack-artig gefaltet wird,
wobei auf der Oberfläche, auf der die Spulenteile (2a, 2b) aufgebracht sind oder aufgebracht werden, mindestens ein Layout so aufgebracht wird, dass die weitere Faltlinie (10) zwischen dem Layout und den zwei Spulenteilen (2a, 2b) liegt und wobei die beiden Spulenteile (2a, 2b) zu einer Seite und das Layout zur entsprechenden anderen Seite der weiteren Faltlinie (10) auf derselben Oberfläche aufgebracht sind.

2. Verfahren zum Herstellen mehrschichtiger elektronischer Datenträger mit mindestens einer Transponderspule (2) für den kontaktlosen Daten- und/ oder Energietransfer im Endlosverfahren, umfassend die Schritte:
- Abwickeln einer bahnförmigen Trägerschicht (1) von einer Vorratsrolle (20),
- sofern nicht bereits vorhanden, Aufbringen von zwei Spulenteilen (2a, 2b) der Transponderspule (2) auf einer Oberfläche der Trägerschicht,
- Falten der Trägerschicht zumindest entlang einer ersten Faltlinie (4), die zwischen den zwei Spulenteilen (2a, 2b) verläuft, derart, dass die zwei Spulenteile (2a, 2b) auf einander gegenüberliegenden Innenseiten der gefalteten Trägerschicht (1) liegen,
- Verbinden der gefalteten Trägerschicht (1) zu einem Trägerschichtverbund, bei dem die zwei Spulenteile (2a, 2b) durch den durch die Faltung erzeugten Zwischenraum hindurch miteinander kontaktiert sind,
- Heraustrennen einzelner Datenträger aus dem Trägerschichtverbund, und
- Falten der Trägerschicht entlang zwei weiterer Faltlinien (6, 10), die seitlich neben den zwei Spulenteilen parallel zur ersten Faltlinie (4) auf gegenüberliegenden Seiten der zwei Spulenteile verlaufen, derart, dass die Trägerschicht insgesamt zick-zack-artig gefaltet wird,
wobei auf der Oberfläche, auf der die Spulenteile (2a, 2b) aufgebracht sind oder aufgebracht werden, mindestens ein Layout so aufgebracht wird, dass die weiteren Faltlinien (6,10) zwischen dem Layout und den zwei Spulenteilen (2a, 2b) liegen und wobei die beiden Spulenteile (2a, 2b) zu einer Seite und das Layout zur entsprechenden anderen Seite der weiteren Faltlinien (6, 10) auf derselben Oberfläche aufgebracht sind.

3. Verfahren nach Anspruch 1 oder 2, **dadurch gekennzeichnet, dass** sich die erste Faltlinie (4) in Abwickelrichtung erstreckt.

4. Verfahren nach einem der Ansprüche 1 bis 3, **dadurch gekennzeichnet, dass** zum Falten eingesetzte Faltkräfte einerseits senkrecht auf die Oberfläche der Trägerschicht gerichtete Kräfte im Faltlinienbereich und andererseits einander entgegengesetzte, auf die Trägerschichtseiten wirkende Kräfte umfassen, so dass sich die Trägerschicht im Faltlinienbereich in die entsprechende Faltrichtung durchdrückt.

5. Verfahren nach einem der Ansprüche 1 bis 4, **gekennzeichnet durch** den weiteren Schritt des Aufbringens einer Isolierschicht (14) zwischen den zwei Spulenteilen (2a, 2b) in einem Bereich, in dem sich die zwei Spulenteile (2a, 2b) nach dem Schritt des Faltens der Trägerschicht (1) kreuzen.

6. Verfahren nach einem der Ansprüche 1 bis 5, **dadurch gekennzeichnet, dass** der Schritt des Verbindens der gefalteten Trägerschicht zu einem Trägerschichtverbund einen Laminierprozess umfasst.

7. Halbzeug für einen mehrschichtigen elektronischen Datenträger, umfassend eine Trägerschicht (1) mit einer Oberfläche, auf der zumindest zwei Spulenteile (2a, 2b) einer Transponderspule (2) für den kontaktlosen Daten- und/oder Energietransfer angeordnet sind, wobei die Trägerschicht (1) entlang einer zwischen den zwei Spulenteilen verlaufenden ersten Faltlinie (4) derart gefaltet ist, dass die zwei Spulenteile (2a, 2b) auf einander gegenüberliegenden Innenseiten der gefalteten Trägerschicht (1) liegen, wobei die zwei Spulenteile (2a, 2b) durch den durch die Faltung gebildeten Zwischenraum hindurch miteinander kontaktiert sind, und wobei die Trägerschicht (1) eine zweite Faltlinie (10) aufweist, zu deren einer Seite die zwei Spulenteile (2a, 2b) aufgebracht sind, **dadurch gekennzeichnet, dass** zur anderen Seite der zweiten Faltlinie (10) ein erstes Layout auf derselben Oberfläche aufgebracht ist wie die zwei Spulenteile (2a, 2b) und dass die Trägerschicht (1) entlang der zweiten Faltlinie (10) derart gefaltet ist, dass das erste Layout in Bezug auf die zwei miteinander kontaktierten Spulenteile (2a, 2b) nach außen weist.

8. Mehrschichtiger elektronischer Datenträger mit mindestens einer Transponderspule (2) für den kontaktlosen Daten- und/oder Energietransfer, umfassend eine Trägerschicht (1) mit einer Oberfläche, auf der zumindest zwei Spulenteile (2a, 2b) der Transponderspule (2) angeordnet sind, wobei die Trägerschicht (1) entlang einer zwischen den zwei Spulenteilen verlaufenden ersten Faltlinie (4) derart gefaltet ist, dass die zwei Spulenteile (2a, 2b) auf einander gegenüberliegenden Innenseiten der gefalteten Trägerschicht (1) liegen, wobei die zwei Spulenteile (2a, 2b) durch den durch die Faltung gebildeten Zwischenraum hindurch miteinander kontaktiert sind, und wobei die Trägerschicht (1) eine zweite Faltlinie (10) aufweist, zu deren einer Seite die zwei Spulenteile (2a, 2b) aufgebracht sind, **dadurch gekennzeichnet, dass** zur anderen Seite der zweiten Faltlinie (10) ein erstes Layout auf derselben Oberfläche aufgebracht ist, wie die zwei Spulenteile (2a, 2b) und dass die Trägerschicht (1) entlang der zweiten Faltlinie (10) derart gefaltet ist, dass das erste Layout in Bezug auf die zwei miteinander kontaktierten Spulenteile (2a, 2b) nach außen weist.

9. Halbzeug oder Datenträger nach Anspruch 7 oder 8, **dadurch gekennzeichnet, dass** die Trägerschicht (1) eine dritte Faltlinie (6) aufweist, zu deren einer Seite näherliegend die beiden Spulenteile (2a, 2b) und entfernter liegend das erste Layout und zu deren anderer Seite ein zweites Layout auf derselben Oberfläche aufgebracht sind, wobei die Trägerschicht (1) entlang der dritten Faltlinie (6) derart gefaltet ist, dass das zweite Layout in Bezug auf die zwei miteinander kontaktierten Spulenteile (2a, 2b) nach außen weist.

10. Halbzeug oder Datenträger nach Anspruch 7 oder 8, **dadurch gekennzeichnet, dass** die Trägerschicht (1) eine dritte Faltlinie (6') aufweist, zu deren einer Seite näher liegend die zwei Spulenteile (2a, 2b) und entfernter liegend das erste Layout aufgebracht sind und zu deren anderer Seite die Trägerschicht (1) als Isolierschicht (1') ausgebildet ist, wobei die Trägerschicht (1) entlang der dritten Faltlinie (6') derart gefaltet ist, dass die Isolierschicht als isolierende Zwischenschicht im Zwischenraum zwischen den zwei Spulenteilen (2a, 2b) liegt.

11. Halbzeug oder Datenträger nach einem der Ansprüche 7 bis 9, **gekennzeichnet durch** eine von der Trägerschicht (1) verschiedene, isolierende Zwischenschicht (14) im Zwischenraum zwischen den zwei Spulenteilen (2a, 2b).

12. Halbzeug oder Datenträger nach einem der Ansprüche 7 bis 11, **dadurch gekennzeichnet, dass** die Trägerschicht (1) eine weitere Faltlinie aufweist, zu deren einer Seite näher liegend das erste Layout und entfernter liegend die zwei Spulenteile (2a, 2b) aufgebracht sind und zu deren anderer Seite die Trägerschicht (1) zumindest teilweise als transluzente Schicht (1e, 1f) ausgebildet ist, wobei die Trägerschicht (1) entlang dieser weiteren Faltlinie derart gefaltet ist, dass die transluzente Schicht (1e, 1f) über dem ersten Layout liegt und das erste Layout durch die gefaltete Trägerschicht hindurch visuell erkennbar ist.

13. Halbzeug oder Datenträger nach einem der Ansprüche 7 bis 12, **dadurch gekennzeichnet, dass** die Faltlinien parallel zueinander verlaufen.

14. Halbzeug oder Datenträger nach einem der Ansprüche 7 bis 13, **dadurch gekennzeichnet, dass** die der Oberfläche gegenüberliegende Oberfläche der Trägerschicht (1) weder bedruckt noch mit einem elektronischen Bauelement versehen ist.

## Claims

1. A method for manufacturing multilayer electronic data carriers having at least one transponder coil (2) for contactless data transfer and/ or energy transfer in a continuous process, comprising the steps of:
- unwinding a sheet-shaped carrier layer (1) from a storage roller (20),
- unless already present, applying two coil members (2a, 2b) of the transponder coil (2) to a surface of the carrier layer,
- folding the carrier layer at least along a first folding line (4) extending between the two coil members (2a, 2b), in such a fashion that the two coil members (2a, 2b) lie on mutually opposing inner sides of the folded carrier layer (1),
- connecting the folded carrier layer (1) to form a carrier layer composite in which the two coil members (2a, 2b) are contacted to each other through the gap produced by the folding,
- detaching individual data carriers from the carrier layer composite, and
- folding the carrier layer along at least one further folding line (10) extending laterally beside the two coil members parallel to the first folding line (4), in such a fashion that the carrier layer in its entirety is folded in zigzag fashion,
wherein on the surface to which the coil members (2a, 2b) are applied or are being applied, at least one layout is so applied that the further folding line (10) lies between the layout and the two coil members (2a, 2b) and wherein the two coil members (2a, 2b) are applied to one side and the layout to the corresponding other side of the further folding line (10) on the same surface.

2. A method for producing multilayer electronic data carriers with at least one transponder coil (2) for contactless data transfer and/ or energy transfer in a continuous process, comprising the steps of:
- unwinding a sheet-shaped carrier layer (1) from a storage roller (20),
- unless already present, applying two coil members (2a, 2b) of the transponder coil (2) to a surface of the carrier layer,
- folding the carrier layer at least along a first folding line (4) extending between the two coil members (2a, 2b), in such a fashion that the two coil members (2a, 2b) lie on mutually opposing inner sides of the folded carrier layer (1),
- connecting the folded carrier layer (1) to form a carrier layer composite in which the two coil members (2a, 2b) are contacted to each other through the gap produced by the folding,
- detaching individual data carriers from the carrier layer composite, and
- folding the carrier layer along two further folding lines (6, 10) extending laterally beside the two coil members parallel to the first folding line (4) on opposing sides of the two coil members, in such a fashion that the carrier layer in its entirety is folded in zigzag fashion,
wherein on the surface to which the coil members (2a, 2b) are applied or are being applied, at least one layout is so applied that the further folding lines (6, 10) lie between the layout and the two coil members (2a, 2b) and wherein the two coil members (2a, 2b) are applied to one side and the layout to the corresponding other side of the further folding lines (6, 10) on the same surface.

3. The method according to claim 1 or 2, **characterized in that** the first folding line (4) extends in the direction of unwinding.

4. The method according to any of the claims 1 to 3, **characterized in that** folding forces used for folding comprise on the one hand forces directed perpendicularly to the surface of the carrier layer in the folding-line region, and on the other hand mutually opposing forces acting on the sides of the carrier layer, so that the carrier layer bends in the corresponding folding direction in the foldirig-line region.

5. The method according to any of the claims 1 to 4, **characterized by** the further step of applying an insulating layer (14) between the two coil members (2a, 2b) in a region in which the two coil members (2a, 2b) intersect after the step of folding the carrier layer (1).

6. The method according to any of the claims 1 to 5, **characterized in that** the step of connecting the folded carrier layer to form a carrier layer composite comprises a lamination process.

7. A semi-finished product for a multilayer electronic data carrier, comprising a carrier layer (1) with a surface on which there are arranged at least two coil members (2a, 2b) of a transponder coil (2) for contactless data transfer and/ or energy transfer, wherein the carrier layer (1) is folded along a first folding line (4) extending between the two coil members in such a fashion that the two coil members (2a, 2b) lie on mutually opposing inner sides of the folded carrier layer (1), wherein the two coil members (2a, 2b) are contacted with each other through the gap formed by folding, and wherein the carrier layer (1) has a second folding line (10) on whose one side the two coil members (2a, 2b) are applied, **characterized in that** on the other side of the second folding line (10) there is applied a first layout on the same surface as the two coil members (2a, 2b), and that the carrier layer (1) is folded along the second folding line (10) in such a fashion that the first layout points outward with reference to the two coil members (2a, 2b) contacted with each other.

8. A multilayer electronic data carrier with at least one transponder coil (2) for contactless data transfer and/ or energy transfer, comprising a carrier layer (1) with a surface on which there are arranged at least two coil members (2a, 2b) of the transponder coil (2), wherein the carrier layer (1) is folded along a first folding line (4) extending between the two coil members in such a fashion that the two coil members (2a, 2b) lie on mutually opposing inner sides of the folded carrier layer (1), wherein the two coil members (2a, 2b) are contacted with each other through the gap formed by folding, and wherein the carrier layer (1) has a second folding line (10) on whose one side there are applied the two coil members (2a, 2b), **characterized in that** on the other side of the second folding line (10) there is applied a first layout on the same surface as the two coil members (2a, 2b), and that the carrier layer (1) is folded along the second folding line (10) in such a fashion that the first layout points outward with reference to the two coil members (2a, 2b) contacted with each other.

9. The semi-finished product or data carrier according to claim 7 or 8, **characterized in that** the carrier layer (1) has a third folding line (6), on whose one side the two coil members (2a, 2b) are applied closer to it and the first layout is applied further away from it, and on whose other side a second layout is applied on the same surface, wherein the carrier layer (1) is folded along the third folding line (6) in such a fashion that the second layout points outward with reference to the two coil members (2a, 2b) contacted with each other.

10. The semi-finished product or data carrier according to claim 7 or 8, **characterized in that** the carrier layer (1) has a third folding line (6'), on whose one side the two coil members (2a, 2b) are applied closer to it and the first layout is applied further away from it, and on whose other side the carrier layer (1) is configured as an insulating layer (1'), wherein the carrier layer (1) is folded along the third folding line (6') in such a fashion that the insulating layer lies as an insulating intermediate layer in the gap between the two coil members (2a, 2b).

11. The semi-finished product or data carrier according to any of the claims 7 to 9, **characterized by** an insulating intermediate layer (14) in the gap between the two coil members (2a, 2b), said insulating layer being different from the carrier layer (1).

12. The semi-finished product or data carrier according to any of the claims 7 to 11, **characterized in that** the carrier layer (1) has a further folding line, on whose one side the first layout is applied closer to it and the two coil members (2a, 2b) are applied further away from it, and on whose other side the carrier layer (1) is configured at least partly as a translucent layer (1e, 1f), wherein the carrier layer (1) is folded along this further folding line in such a fashion that the translucent layer (1e, If) lies above the first layout and the first layout is visually recognizable through the folded carrier layer.

13. The semi-finished product or data carrier according to any of the claims 7 to 12, **characterized in that** the folding lines extend parallel to each other.

14. The semi-finished product or data carrier according to any of the claims 7 to 13, **characterized in that** the surface of the carrier layer (1) lying opposite the surface is neither printed nor equipped with an electronic component.

## Revendications

1. Procédé de fabrication de supports de données électroniques multicouches comprenant au moins une bobine de transpondeur (2) pour le transfert sans contact de données et/ou d'énergie dans un procédé sans fin, comprenant les étapes :
- déroulement d'une couche support (1) en forme de bande d'un rouleau débiteur (20),
- dans la mesure où il n'y en a pas déjà, pose de deux parties de bobine (2a, 2b) de la bobine de transpondeur (2) sur une surface de la couche support,
- pliage de la couche support au moins le long d'une première ligne de pliage (4) qui décrit un tracé entre les deux parties de bobine (2a, 2b), de telle sorte que les deux parties de bobine (2a, 2b) se trouvent sur des côtés intérieurs opposés l'un à l'autre de la couche support (1) pliée,
- accolement de la couche support (1) pliée de manière à obtenir un composite de couches support dans lequel les deux parties de bobine (2a, 2b) sont mises en contact l'une avec l'autre à travers l'interstice engendré par le pliage,
- découpage de supports de données à partir du composite de couches support, et
- pliage de la couche support le long d'au moins une ligne de pliage supplémentaire (10) qui décrit un tracé latéralement à côté des deux parties de bobine parallèlement à la première ligne de pliage (4), de telle sorte que la couche support (1) est pliée dans l'ensemble en zigzag,
au moins un layout étant appliqué de telle sorte sur la surface sur laquelle les parties de bobine (2a, 2b) sont ou vont être appliquées que la ligne de pliage supplémentaire (10) se trouve entre le layout et les deux parties de bobine (2a, 2b), et c'étant sur la même surface que sont appliquées les deux parties de bobine (2a, 2b), placées quant à elles d'un côté de la ligne de pliage supplémentaire (10), et le layout, placé quant à lui de l'autre côté correspondant.

2. Procédé de fabrication de supports de données électroniques multicouches comprenant au moins une bobine de transpondeur (2) pour le transfert sans contact de données et/ou d'énergie dans un procédé sans fin, comprenant les étapes :
- déroulement d'une couche support (1) en forme de bande d'un rouleau débiteur (20),
- dans la mesure où il n'y en a pas déjà, pose de deux parties de bobine (2a, 2b) de la bobine de transpondeur (2) sur une surface de la couche support,
- pliage de la couche support au moins le long d'une première ligne de pliage (4) qui décrit un tracé entre les deux parties de bobine (2a, 2b), de telle sorte que les deux parties de bobine (2a, 2b) se trouvent sur des côtés intérieurs opposées l'un à l'autre de la couche support (1) pliée,
- accolement de la couche support (1) pliée de manière à obtenir un composite de couches support dans lequel les deux parties de bobine (2a, 2b) sont mises en contact l'une avec l'autre à travers l'interstice engendré par le pliage,
- découpage de supports de données à partir du composite de couches support, et
- pliage de la couche support le long de deux lignes de pliage supplémentaires (6, 10) qui décrivent un tracé latéralement à côté des deux parties de bobine parallèlement à la première ligne de pliage (4) en des côtés opposés des deux parties de bobine, de telle sorte que la couche support (1) est pliée dans l'ensemble en zigzag,
au moins un layout étant appliqué de telle sorte sur la surface sur laquelle les parties de bobine (2a, 2b) sont ou vont être appliquées que les lignes de pliage supplémentaires (6, 10) se trouvent entre le layout et les deux parties de bobine (2a, 2b), et c'étant sur la même surface que sont appliquées les deux parties de bobine (2a, 2b), placées quant à elles d'un côté des lignes de pliage supplémentaires (6, 10), et le layout, placé quant à lui de l'autre côté correspondant.

3. Procédé selon la revendication 1 ou 2, **caractérisé en ce que** la première ligne de pliage (4) s'étend en direction du déroulement.

4. Procédé selon une des revendications de 1 à 3, **caractérisé en ce que** des forces de pliage mises en oeuvre pour le pliage comprennent d'une part des forces orientées verticalement vers la surface de la couche support dans la zone de ligne de pliage et d'autre part des forces réciproquement opposées exercées sur les côtés de la couche support, de telle sorte que de la couche support fléchit dans la direction de pliage correspondante dans la zone de ligne de pliage.

5. Procédé selon une des revendications de 1 à 4, **caractérisé par** l'étape subséquente de l'application d'une couche isolante (14) entre les deux parties de bobine (2a, 2b) dans une zone dans laquelle les deux parties de bobine (2a, 2b) se croisent après l'étape du pliage de la couche support (1).

6. Procédé selon une des revendications de 1 à 5, **caractérisé en ce que** l'étape de l'accolement de la couche support pliée de manière à obtenir un composite de couches support comporte un processus de laminage.

7. Semi-fini destiné à un support de données électronique multicouche, comprenant une couche support (1) présentant une surface sur laquelle au moins deux parties de bobine (2a, 2b) d'une bobine de transpondeur (2) sont agencées pour le transfert sans contact de données et/ou d'énergie, la couche support (1) étant pliée de telle sorte le long d'une première ligne de pliage (4) décrivant un tracé entre les deux parties de bobine que les deux parties de bobine (2a, 2b) se trouvent sur des côtés intérieurs opposés l'un à l'autre de la couche support (1) pliée, les deux parties de bobine (2a, 2b) étant mises en contact l'une avec l'autre à travers l'interstice engendré par le pliage, et la couche support (1) présentant une deuxième ligne de pliage (10) de l'un côté de laquelle les deux parties de bobine (2a, 2b) sont appliquées, **caractérisé en ce qu'**un premier layout est appliqué de l'autre côté de la deuxième ligne de pliage (10) sur la même surface que les deux parties de bobine (2a, 2b) et que la couche support (1) est pliée de telle sorte le long de la deuxième ligne de pliage (10) que le premier layout est orienté vers l'extérieur par rapport aux deux parties de bobine (2a, 2b) mises en contact l'une avec l'autre.

8. Support de données électronique multicouche comprenant au moins une bobine de transpondeur (2) pour le transfert sans contact de données et/ou d'énergie, comprenant une couche support (1) présentant une surface sur laquelle au moins deux parties de bobine (2a, 2b) de la bobine de transpondeur (2) sont agencées, la couche support (1) étant pliée de telle sorte le long d'une première ligne de pliage (4) décrivant un tracé entre les deux parties de bobine que les deux parties de bobine (2a, 2b) se trouvent sur des côtés intérieurs opposés l'un à l'autre de la couche support (1) pliée, les deux parties de bobine (2a, 2b) étant mises en contact l'une avec l'autre à travers l'interstice engendré par le pliage, et la couche support (1) présentant une deuxième ligne de pliage (10) de l'un côté de laquelle les deux parties de bobine (2a, 2b) sont appliquées, **caractérisé en ce qu'**un premier layout est appliqué de l'autre côté de la deuxième ligne de pliage (10) sur la même surface que les deux parties de bobine (2a, 2b) et que la couche support (1) est pliée de telle sorte le long de la deuxième ligne de pliage (10) que le premier layout est orienté vers l'extérieur par rapport aux deux parties de bobine (2a, 2b) mises en contact l'une avec l'autre.

9. Semi-fini ou support de données selon la revendication 7 ou 8, **caractérisé en ce que** la couche support (1) présente une troisième ligne de pliage (6) de l'un côté de laquelle les deux parties de bobine (2a, 2b), de manière plus rapprochée quant à elles, et le premier layout, de manière plus éloignée quant à lui, sont appliqués, et cela sur la même surface, sur laquelle est aussi appliqué, de l'autre côté de la ligne de pliage (6), un deuxième layout, la couche support (1) étant pliée de telle sorte le long de la troisième ligne de pliage (6) que le deuxième layout est orienté vers l'extérieur par rapport aux deux parties de bobine (2a, 2b) mises en contact l'une avec l'autre.

10. Semi-fini ou support de données selon la revendication 7 ou 8, **caractérisé en ce que** la couche support (1) présente une troisième ligne de pliage (6') de l'un côté de laquelle les deux parties de bobine (2a, 2b), de manière plus rapprochée quant à elles, et le premier layout, de manière plus éloignée quant à lui, sont appliqués, et de l'autre côté de laquelle la couche support (1) est réalisée sous forme de couche isolante (1'), la couche support (1) étant pliée de telle sorte le long de la troisième ligne de pliage (6') que la couche isolante se trouve en tant que couche intermédiaire isolante dans l'interstice situé entre les deux parties de bobine (2a, 2b).

11. Semi-fini ou support de données selon une des revendications de 7 à 9, **caractérisé par** une couche intermédiaire (14) isolante différente de la couche support (1) et se trouvant dans l'interstice situé entre les deux parties de bobine (2a, 2b).

12. Semi-fini ou support de données selon une des revendications de 7 à 11, **caractérisé en ce que** la couche support (1) présente une ligne de pliage supplémentaire de l'un côté de laquelle le premier layout, de manière plus rapprochée quant lui, et les deux parties de bobine (2a, 2b), de manière plus éloignée quant à elles, sont appliqués, et de l'autre côté de laquelle la couche support (1) est réalisée au moins partiellement sous forme de couche translucide (1e, 1f), la couche support (1) étant pliée de telle sorte le long de cette ligne de pliage supplémentaire que la couche translucide (1e, 1f) se trouve par-dessus le premier layout et que le premier layout est reconnaissable visuellement à travers la couche support (1) pliée.

13. Semi-fini ou support de données selon une des revendications de 7 à 12, **caractérisé en ce que** les lignes de pliage décrivent un tracé parallèle les unes par rapport aux autres.

14. Semi-fini ou support de données selon une des revendications de 7 à 13, **caractérisé en ce que** la surface de la couche support (1) opposée à la surface n'est ni imprimée, nie pourvue d'un composant électronique.
